# FASCICULE DE BREVET EUROPEEN

(11) **EP 0 420 721 B1**
(45) Date de publication et mention de la délivrance du brevet: **01.06.1994**
(21) Numéro de dépôt: 90402570.7
(22) Date de dépôt: 18.09.1990
(51) Int. Cl.: H02G 11/02, G02B 6/44

(54) **Procédé d'enroulement en double d'un câble ou analogue sur la surface externe d'un touret**
Verfahren zur Doppelaufwicklung eines Kabels oder dergleichen auf der Aussenfläche einer Trommel
Process for double-winding a cable or similar on the external surface of a drum

(30) Priorité: 29.09.1989 FR 8912770
(43) Date de publication de la demande: 03.04.1991
(73) Titulaire: L'ETAT FRANCAIS représenté par LE CENTRE NATIONAL D'ETUDES DES TELECOMMUNICATIONS, 92131 Issy-les-Moulineaux (FR)
(72) Inventeur: Pecot, Alain, F-22300 Lannion (FR); Beaumanoir, Yvon, F-22300 Lannion (FR)
(74) Mandataire: Armengaud Ainé, Alain

(56) Documents cités:
- FR-A- 1 582 567
- NL-A- 8 600 821

## Description

La présente invention est relative à un procédé pour la mise en place avec un enroulement en double d'un câble ou analogue sur la surface externe d'un touret ou du tambour d'un treuil, en vue notamment de permettre le déroulement simultané des deux brins de cet enroulement selon deux directions différentes, en particulier opposées l'une à l'autre.

L'invention s'applique plus particulièrement à la mise en place de câbles du genre à fibres optiques dans une canalisation ou une conduite équivalente de grande longueur, dans laquelle le câble doit être tiré à partir d'un poste ou d'une station intermédiaire de distribution de ce câble, disposée sensiblement au point milieu de la longueur de la conduite, le câble étant tiré dans les deux parties de celle-ci en sens inverse, en direction de l'une et de l'autre de leurs extrémités opposées au poste intermédiaire.

On sait en effet que, en raison de la fragilité des câbles à fibres optiques, en particulier de la nécessité lors de leur mise en place, d'éviter des torsions ou des flexions trop prononcées, qui peuvent être très préjudiciables à la tenue mécanique des fibres, le déroulement de ces câbles dans une conduite de protection de faible diamètre et de grande longueur, s'effectue habituellement selon un processus particulier qui se révèle en pratique peu commode et surtout long à mettre en oeuvre, surtout si le câble présente une dimension longitudinale également notable.

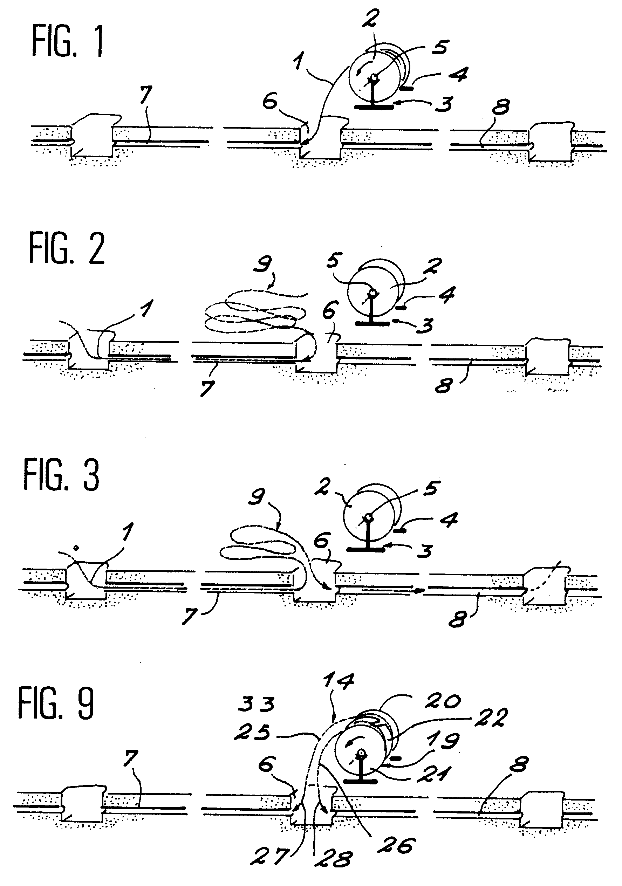

Les Figures 1 à 3 du dessin annexé permettent d'illustrer schématiquement les étapes de ce procédé connu pour la mise en place d'un câble à fibres optiques dans une conduite de ce genre, à partir d'un poste situé sensiblement au milieu de cette dernière.

Sur ces Figures, la référence 1 désigne un câble à fibres optiques classique représenté bobiné d'une extrémité à l'autre de sa longueur sur le touret 2 d'un treuil 3 ou engin de support analogue, comportant un bâti fixe 4 et un axe de rotation 5 horizontal porté par ce bâti et autour duquel tourne le touret en dévidant le câble 1. Le treuil 3 est monté au voisinage d'une séparation 6 prévue entre deux éléments de conduite respectivement 7 et 8, ces éléments présentant des dimensions longitudinales notables, pouvant atteindre plusieurs centaines de mètres chacune, ces longueurs étant de préférence sensiblement égales. La séparation entre les deux éléments est prévue approximativement au milieu de la longueur totale de la conduite. La même disposition est en outre reprise à chacune des extrémités des éléments 7 et 8, la conduite et le câble étant ainsi formé d'un ensemble de sections successives placées dans le prolongement les unes des autres.

Pour réaliser la pose du câble 1 d'un seul tenant dans les éléments 7 et 8 de la conduite, le processus mis en oeuvre est le suivant : dans un premier temps, le touret 2 est dévidé de telle sorte que l'extrémité libre du câble 1 puisse être introduite par la séparation 6 dans l'un des éléments de conduite, ici l'élément 7 (Figure 1), cette extrémité étant soit progressivement tirée jusqu'au bout opposé de cet élément au moyen d'un mécanisme (non représenté) , soit mis en place de façon automatique par un dispositif pneumatique de soufflage selon une technique en elle-même connue et dont le détail importe peu à la présente invention. Une fois la première partie du câble ainsi introduite dans l'élément 7, le touret 2 continue à être dévidé jusqu'à permettre l'accès à l'extrémité opposée du câble se trouvant initialement contre le fût du touret, cette opération étant réalisée en faisant faire au brin correspondant du câble un ensemble de boucles 9, en forme de huit de grandes dimensions afin de limiter les phénomènes de torsion et de flexion du câble (Figure 2). Celui-ci est ainsi déposé et rangé sur le sol à proximité du touret, au voisinage de la séparation 6 entre les éléments de conduite 7 et 8, avant que le brin libre à la fin du dévidement du touret ne soit finalement engagé dans l'extrémité du second élément 8 pour être tiré dans celui-ci ou soufflé jusqu'à l' extrémité opposée de cet élément (Figure 3).

Cette technique de pose d'un câble dans une conduite en deux parties s'avère en fait peu pratique et présente divers inconvénients. En premier lieu, le temps nécessaire à la mise en oeuvre des opérations de dévidage du câble, de rangement au sol puis d'introduction et de tirage du second brin dans l'élément de conduite correspondant est long et implique des manoeuvre fastidieuses, souvent délicates à effectuer sur chantier, lorsque la place manque et que les moyens de manutention du câble sont rudimentaires. Notamment, la formation des boucles en huit exige une aire de rangement suffisante à proximité immédiate du touret pour permettre le rangement convenable de l'ensemble dévidé, qui peut atteindre ou dépasser 1200 mètres. Cette aire doit par ailleurs être très propre de façon à ne pas risquer de polluer la gaine du câble, ce qui pourrait compromettre sa lubrification efficace et homogène dans la conduite pour autoriser son déplacement ultérieur dans celle-ci. Enfin, le rangement au sol du câble oblige à prendre des précautions lors des résorptions des boucles au cours du tirage sur la longueur de la conduite, l'opération étant d'autant plus périlleuse pour la sécurité du câble que la vitesse de tirage ou de soufflage est importante, pouvant atteindre, voire dépasser 200 m/mn.

La présente invention concerne un procédé pour l'enroulement en double d'un câble ou analogue sur un touret, qui évite ces inconvénients, en permettant une mise en place du câble dans deux éléments de grande longueur d'une conduite, disposés dans le prolongement l'un de l'autre, avec des vitesses importantes, que le câble soit tiré mécaniquement ou introduit dans ces éléments et déplacé dans ceux-ci avec d'autres techniques, notamment par soufflage pneumatique.

Le procédé suivant l'invention vise en particulier à permettre un conditionnement du câble sur son touret tel qu'il réserve un accès simultané aux deux extrémités de ce câble, de façon à pouvoir assurer le tirage simultané ou séparé de ces extrémités respectivement dans l'un et l'autre des deux éléments de la conduite, ceci sans avoir à dévider le câble au sol sur le site du chantier.

A cet effet, le procédé considéré se caractérise en ce qu'il consiste, à partir d'un câble préalablement enroulé en continu de façon conventionnelle sur un premier touret, à dévider ce câble pour l'enrouler partiellement sur un second touret dont l'axe est parallèle à celui du premier jusqu'à répartir sur les deux tourets deux longueurs de câble déterminées, à disposer les axes des deux tourets sensiblement dans le prolongement l'un de l'autre en les faisant pivoter chacun respectivement de 90°,à former ensuite une boucle avec la partie du câble disposée entre les deux tourets, à fixer le point milieu de cette boucle dans la partie centrale d'un troisième touret, disposé avec son axe parallèle à la direction commune des axes des deux premiers tourets, et à enrouler les deux brins du câble des deux côtés de la boucle simultanément sur le troisième touret, en dévidant ensemble les premier et second tourets.

De préférence, les longueurs des enroulements des deux brins du câble sur le troisième touret sont sensiblement égales, les extrémités de ces brins accessibles simultanément, pouvant être fixées en attente sur deux parties séparées du touret.

L'invention concerne également un dispositif pour la mise en oeuvre du procédé, comportant un ensemble de trois tourets dont les deux premiers ont des axes parallèles pouvant pivoter pour être disposés dans le prolongement l'un de l'autre et un troisième touret dont l'axe est parallèle à la direction commune des deux premiers, caractérisé en ce que le troisième touret comporte deux joues d'extrémité parallèles et une joue intermédiaire délimitant avec les joues d'extrémité des espaces voisins mais séparés pour l'enroulement des deux brins du câble, la joue intermédiaire comprenant une fente pour le passage des brins dans chacun des espaces d'enroulement et l'immobilisation sur le touret du point milieu de la boucle au droit de la joue intermédiaire.

D'autres caractéristiques du procédé et du dispositif considérés, apparaîtront encore à travers la description qui suit d'un exemple de mise en oeuvre, donné ci-après à titre indicatif et non limitatif, en référence aux dessins annexés sur lesquels :
- Les Figures 4, 5, 6 et 7 sont des schémas de principe des tourets nécessaires à l'exécution du procédé.
- La Figure 8 est une vue en perspective du troisième touret, illustrant notamment la structure de la joue intermédiaire de celui-ci.
- La Figure 9 est un schéma de l'installation mettant en oeuvre un touret sur lequel un câble a été enroulé en double conformément au procédé de l'invention.

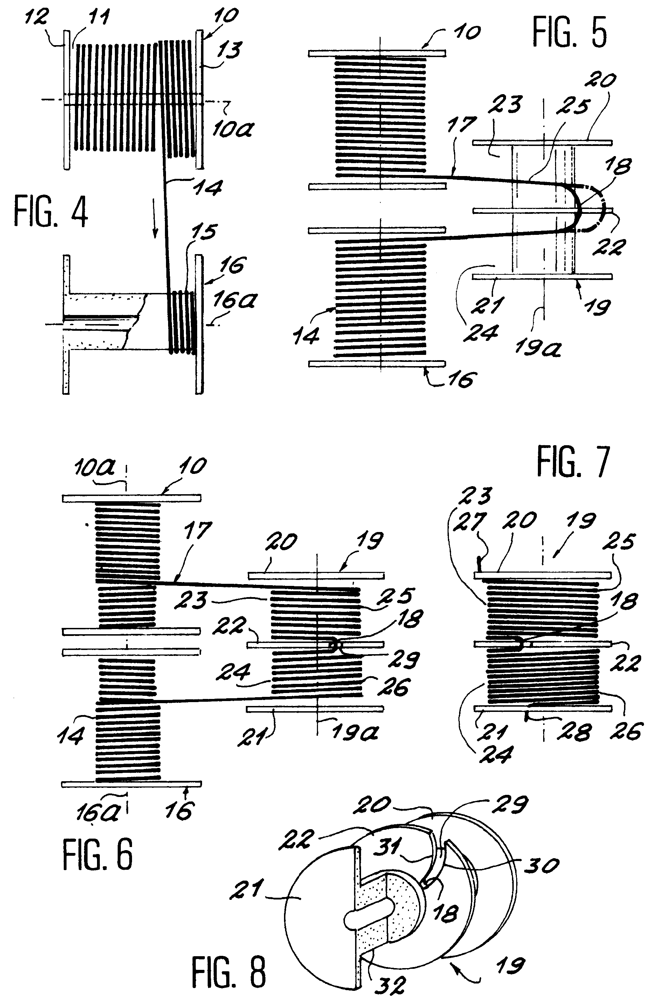

Sur les Figures 4 à 6, la référence 10 désigne un touret classique, comportant notamment un fût 11 et deux joues d'extrémité respectivement 12 et 13. Sur ce touret est enroulé de façon conventionnelle un câble 14, qui peut être notamment à fibres optiques mais qui pourrait bien entendu avoir une toute autre constitution pour une application différente. L'extrémité 15 du câble 14 est fixée sur le fût d'un second touret 16, de préférence mais non nécessairement identique au touret 10. Les deux tourets 10 et 16 présentent des axes respectivement 10a, 16a, parallèles l'un à l'autre et sont associés à un mécanisme (non représenté) permettant d'enrouler sur le fût du second touret 16 une longueur appropriée du câble 14, simultanément déroulée du premier 10 (Figure 4).

Lorsque le câble 14 se trouve ainsi suffisamment réparti sur le premier et le second touret, avec sur chacun d'eux des longueurs relatives choisies et exactement déterminées, la somme de celles-ci représentant, à la distance qui sépare les tourets près, la longueur totale du câble, on fait pivoter les deux tourets de 90° de manière à amener leurs axes 10a et 16a dans le prolongement l'un de l'autre puis on forme entre ces tourets une boucle 17 (Figure 5) de part et d'autre d'un point milieu 18. Celui-ci est alors fixé sur un troisième touret 19, dont l'axe 19a est de préférence disposé parallèlement à la direction commune des axes des tourets 10 et 16, ce troisième touret 19 comportant non seulement deux joues d'extrémité latérales respectivemet 20 et 21 mais également une joue intermédiaire 22, délimitant avec chacune des joues latérales précédentes des espaces 23 et 24 dans lesquels sont disposés les deux brins 25 et 26 de la boucle 17, de part et d'autre du point milieu 18 en permettant l'enroulement de ces brins dans ces espaces au fur et à mesure que le câble 14 se dévide des deux premiers tourets 10 et 16 (Figure 6). Lorsque ces derniers sont totalement dévidés, le câble 14 se trouve ainsi entièrement reporté sur le touret 19 avec ses deux brins convenablement répartis dans les espaces 23 et 24, les extrémités respectivement 27 et 28 de ces brins pouvant être avantageusement fixées sur les joues latérales 20 et 21 des tourets ou en tout autre endroit, tout en étant directement accessibles indépendamment l'une de l'autre (Figure 7).

La vue en perspective de la Figure 8 illustre notamment la forme de la joue intermédiaire 22 du touret 19, comprenant une fente sensiblement radiale 29 dont les côtés 30 et 31 vont en se rapprochant depuis la périphérie de la joue jusqu'au fût central 32 du touret, contre lequel peut être ainsi facilement amené et immobilisé le point milieu 18 de la boucle 17 dont le profil reste à tout instant compatible avec le rayon de courbure minimal admis par le câble, en particulier par les fibres optiques de celui-ci.

La Figure 8 permet dès lors de voir comment le câble 14 ainsi enroulé en double sur le touret 19 peut être déroulé de celui-ci de telle sorte que chacun de ses brins 25 et 26 soit mis en place simultanément par tirage ou autre processus analogue dans les éléments de conduite 7 et 8, disposés dans le prolongement l'un de l'autre. A cet effet, le touret 19 est placé au voisinage de la séparation 6 entre ces éléments, tandis que les extrémités 27 et 28 du câble sont respectivement amenées dans les orifices d'entrée correspondants des éléments 7 et 8, le tirage des deux brins pouvant ensuite être effectué jusqu'à dévidement complet du touret.

Bien entendu, les longueurs des brins du câble enroulés dans les espaces 23 et 24 du touret correspondent de préférence sensiblement aux longueurs des éléments 7 et 8, qui sont généralement identiques ou tout au moins voisines. Toutefois, lorsque l'une de ces longueurs est supérieure à l'autre, ce qui est parfaitement possible, le point de tirage en double du câble n'est plus situé au milieu de la conduite ; dans ce cas, la pose débute par la section la plus longue jusqu'à ce que les longueurs résiduelles encore enroulées sur les deux parties du touret 19 soient égales, à partir de quoi le déroulement de ces longueurs de câble s'effectue de façon simultanée, comme indiqué ci-dessus.

Au cours de ces opérations, les longueurs de câble déroulées peuvent être à tout moment contrôlées par des capteurs du genre de celui-ci schématiquement représenté en 33 sur la Figure 9. En variante, on peut prévoir lors de la phase de conditionnement du câble sur les tourets de fixer l'extrémité du brin le plus court sur le touret ou le cas échéant sur le brin le plus long, de manière à repérer de façon précise le moment où les longueurs restantes sont égales et à partir duquel peut s'effectuer le tirage en double de celles-ci.

On réalise ainsi un ensemble de conditionnement en double sur touret pour un câble à fibres optiques ou d'un autre type, qui permet de s'affranchir des problèmes liés au dévidage de ce câble sur chantier, le tirage du câble ou son soufflage en conduite pouvant être effectué de manière sûre même avec des vitesses de pose élevées, et avec un gain de temps particulièrement appréciable.

Bien entendu, il va de soi que l'invention ne se limite pas à l'exemple de réalisation non plus qu'à l'application particulière décrits ci-dessus ; elle en embrasse au contraire toutes les variantes, le procédé proposé pouvant de la même manière assurer le déroulement de tout élément linéaire à répartir selon deux longueurs différentes, éventuellement égales, dans deux emplacements distincts disposés au voisinage l'un de l'autre.

## Revendications

1. Procédé pour la mise en place avec un enroulement en double d'un câble ou analogue sur la surface externe d'un touret ou d'un tambour de treuil, en vue de permettre le déroulement simultané des deux brins de cet enroulement selon deux directions différentes, en particulier opposées l'une à l'autre, caractérisé en ce qu'il consiste, à partir d'un câble (14) préalablement enroulé en continu de façon conventionnelle sur un premier touret (10), à dévider ce câble pour l'enrouler partiellement sur un second touret (16) dont l'axe (16a) est parallèle à celui (10a) du premier jusqu'à répartir sur les deux tourets deux longueurs de câble déterminées, à disposer les axes des deux tourets sensiblement dans le prolongement l'un de l'autre en les faisant pivoter chacun respectivement de 90°, à former ensuite une boucle (17) avec la partie du câble disposée entre les deux tourets, à fixer le point milieu (18) de cette boucle dans la partie centrale d'un troisième touret (19), disposé avec son axe (19a) parallèle à la direction commune des axes des deux premiers tourets, et à enrouler les deux brins (25 et 26) du câble des deux côtés de la boucle simultanément sur le troisième touret, en dévidant ensemble les premier et second tourets.

2. Procédé selon la revendication 1, caractérisé en ce qu'on dispose des longueurs d'enroulement des deux brins du câble sur le troisième touret qui sont de préférence sensiblement égales, les extrémités de ces brins étant accessible simultanément et fixées en attente sur deux parties séparées du touret.

3. Procédé selon la revendication 1, caractérisé en ce qu'on dispose des longueurs d'enroulement des deux brins du câble sur le troisième touret qui sont différentes, l'extrémité du brin le plus court étant solidarisée sur le touret ou sur le brin le plus long avant achèvement de l'enroulement de celui-ci.

4. Dispositif pour la mise en oeuvre du procédé selon l'une quelconque des revendications 1 à 3, comportant un ensemble de trois tourets dont les deux premiers ont des axes parallèles pouvant pivoter pour être disposés dans le prolongement l'un de l'autre et un troisième touret dont l'axe est parallèle à la direction commune des deux premiers, caractérisé en ce que le troisième touret (19) comporte deux joues d'extrémité parallèles (20,21) et une joue intermédiaire (22) délimitant avec les joues d'extrémité des espaces voisins mais séparés (23,24) pour l'enroulement des deux brins (25,26) du câble (14), la joue intermédiaire comprenant une fente (29) pour le passage des brins dans chacun des espaces d'enroulement et l'immobilisation sur le touret du point milieu (18) de la boucle (17), au droit de la joue intermédiaire.

5. Dispositif selon la revendication 4, caractérisé en ce qu'un capteur mesure en permanence les longueurs des brins de câble enroulées ou déroulées sur les tourets.

6. Application du dispositif selon l'une des revendications 4 ou 5 pour la mise en place d'un câble, notamment à fibres optiques dans deux éléments d'une conduite disposées dans le prolongement l'un de l'autre, caractérisé en ce qu'il consiste à enrouler le câble en double sur le troisième touret conformément au procédé selon l'une quelconque des revendications 1 à 3, puis à dérouler les deux brins du câble pour les tirer ou les souffler respectivement dans l'un et l'autre des deux élément de conduite.

## Claims

1. Method of placing, with a double winding, a cable or the like onto the outer surface of a reel or winch drum, for the purpose of making possible the simultaneous unwinding of the two strands of this winding in two different directions, especially mutually opposed directions, characterized in that it consists, starting from a cable (14) previously wound continuously in conventional manner on a first reel (10), of unreeling this cable to wind it partly onto a second reel (16), the axis (16a) of which is parallel to the axis (10a) of the first reel, until two determined lengths of cable have been distributed onto the two reels, of arranging the axes of the two reels substantially in a continuation the one of the other by pivoting each of them respectively through 90°, of then forming a loop (17) with the part of the cable disposed between the two reels, of fixing the mid-point (18) of this loop in the central part of a third reel (19), arranged with its axis (19a) parallel to the common direction of the axes of the first two reels, and of winding the two strands (25 and 26) of the cable from the two sides of the loop simultaneously onto the third reel, simultaneously emptying the first and second reels.

2. Method according to Claim 1, characterized in that reeled lengths of the two strands of the cable which are preferably substantially equal are disposed on the third reel, the ends of these strands being simultaneously accessible and fixed in waiting on two separate parts of the reel.

3. Method according to Claim 1, characterized in that reeled lengths of the two strands of the cable that are different are disposed on the third reel, the end of the shorter strand being fixed to the reel or to the longer strand before completing the winding on of the latter.

4. Device for carrying out the method according to any one of Claims 1 to 3, comprising an assembly of three reels, of which the first two have parallel axes capable of pivoting so as to be arranged in a continuation the one of the other, and a third reel, the axis of which is parallel to the common direction of the first two, characterized in that the third reel (19) comprises two parallel cheek plates (20, 21) and one intermediate plate (22), delimiting with the cheek plates adjacent but separate spaces (23, 24) for the winding-on of the two strands (25, 26) of the cable (14), the intermediate plate comprising a slot (29) for the passage of the strands into each of the winding spaces and the fixing on the reel of the mid-point (18) of the loop (17), at the position of the intermediate plate.

5. Device according to Claim 4, characterized in that a pick-up continually measures the lengths of the cable strands wound onto or unwound from the reels.

6. Application of the device according to one of Claims 4 or 5 for the positioning of a cable, notably a fibre optics cable, into two elements of a duct disposed in a continuation the one of the other, characterized in that it consists of winding the cable double onto the third reel in accordance with the method according to any one of Claims 1 to 3, then of unwinding the two strands of the cable to pull them or blow them respectively into the one and the other of the two duct elements.

## Patentansprüche

1. Verfahren zur Bereitstellung eines auf der Außenfläche einer Haspel oder Trommel einer Winde doppelt aufgewickelten Kabels oder dergleichen, dessen zwei Trumme gleichzeitig nach zwei verschiedenen, insbesondere zueinander entgegengesetzten Richtungen abgewickelt werden können, **dadurch gekennzeichnet,** daß man von einem Kabel (14) ausgeht, das zuvor in üblicher Weise fortlaufend auf eine erste Haspel (10) aufgewickelt ist, dieses Kabel abwickelt und teilweise auf eine zweite Haspel (16) aufwickelt, deren Achse (16a) parallel zur Achse (10a) der ersten Haspel ist, bis sich auf den zwei Haspeln zwei bestimmte Längen des Kabels befinden, daß man darauf die Achsen der zwei Haspeln im wesentlichen in eine Linie bringt, indem man die Haspeln jeweils um 90° dreht, daß man anschließend mit dem zwischen den zwei Haspeln liegenden Teil des Kabels eine Schleife (17) bildet, den Mittelpunkt (18) dieser Schleife im Mittelteil einer dritten Haspel (19) befestigt, die mit ihrer Achse (19a) parallel zur gemeinsamen Richtung der Achsen der zwei ersten Haspeln angeordnet ist, und die zwei Trumme (25 und 26) des Kabels von den zwei Seiten der Schleife gleichzeitig auf der dritten Haspel aufwickelt, wobei man die erste und zweite Haspel gemeinsam abwickelt.

2. Verfahren nach Anspruch 1, **dadurch gekennzeichnet,** daß man auf der dritten Haspel aufgewickelte Längen von zwei Kabeltrummen anordnet, die vorzugsweise gleich sind, wobei die Enden dieser Trumme gleichzeitig zugängig und in der Bereitschaftslage auf zwei getrennten Teilen der Haspel befestigt sind.

3. Verfahren nach Anspruch 1, **dadurch gekennzeichnet,** daß man auf der dritten Haspel aufgewickelte Längen von zwei Kabeltrummen anordnet, die verschieden sind, wobei das Ende des kürzeren Trums auf der Haspel oder auf dem längeren Trum festgelegt wird, bevor dieses fertig aufgewickelt wird.

4. Vorrichtung zur Durchführung des Verfahrens nach einem der Ansprüche 1 bis 3, welche eine Anordnung von drei Haspeln aufweist, von denen die zwei ersten parallele Achsen haben und so schwenkbar sind, daß die eine Achse in der Verlängerung der anderen angeordnet ist, und die Achse der dritten Haspel parallel zur gemeinsamen Richtung der zwei ersten ist, **dadurch gekenn****zeichnet,** daß die dritte Haspel (19) zwei parallele Außenwangen (20,21) und eine Zwischenwange (22) aufweist, welche mit den Außenwangen benachbarte, jedoch getrennte Räume (23,24) für die Aufwicklung von zwei Trummen (25,26) des Kabels (14) aufweist, wobei die Zwischenwange einen Schlitz (29) für den Durchtritt der Trumme in jede der Aufwickelräume und für die Festlegung des Mittelpunktes (18) der Schleife (17) auf der Haspel Im Bereich der Zwischenwange aufweist.

5. Vorrichtung nach Anspruch 4, **dadurch gekennzeichnet,** daß ein Fühler dauernd die Längen der auf die Haspeln aufgewickelten oder davon abgewickelten Kabeltrumme mißt.

6. Anwendung der Vorrichtung nach einem der Ansprüche 4 oder 5 zum Verlegen eines Kabels, besonders eines solchen mit optischen Fasern, in zwei Abschnitten einer Leitung, von denen der eine in der Verlängerung des anderen angeordnet ist, **dadurch gekenn****zeichnet,** daß man das Kabel auf der dritten Haspel gemäß dem Verfahren eines der Ansprüche 1 bis 3 doppelt aufwickelt und dann die zwei Kabeltrumme abwickelt, um sie jeweils in den einen und den anderen der zwei Abschnitte der Leitung zu ziehen oder zu saugen.
